# EUROPEAN PATENT SPECIFICATION

(11) **EP 3 425 304 B1**
(45) Date of publication and mention of the grant of the patent: **16.02.2022**
(21) Application number: 18020323.4
(22) Date of filing: 04.07.2018
(51) Int. Cl.: F24S 30/422, F21S 9/03

(54) **LIGHT UNIT GROUP CONNECTION**
VERBINDUNG FÜR LICHTEINHEITGRUPPE
RACCORDEMENT POUR GROUPE D'UNITÉS DE LUMIÈRE

(30) Priority: 07.07.2017 SE 1730184
(43) Date of publication of application: 09.01.2019
(73) Proprietor: FEBY AB, 331 35 Värnamo (SE)
(72) Inventor: Ferman, Magnus, 331 54 Värnamo (SE)
(74) Representative: AWA Sweden AB

(56) References cited:
- WO-A1-2016/143957
- CN-A- 102 588 860
- DE-A1-102007 041 842
- DE-U1- 20 007 434
- JP-U- 3 168 977
- KR-A- 20130 125 636
- KR-U- 20110 000 324
- KR-U- 20120 001 046
- US-A1- 2011 310 596

## Description

### FIELD OF THE INVENTION

The present invention relates to street lights and solar energy production.

### BACKGROUND

Street lights with PV solar units mounted in conjunction or integrated are known in the art. This type of combined Light units will be increasingly popular as it can save and deliver a significant excess of electrical energy. A main task in development and installation of such devices is to provide a maximized solar energy production back to the electrical grid and or to a battery. For a maximized solar energy production, it is important that the PV solar surface can be made as big as possible and has a clean and an optimized turning and leaning angle towards the sun.

The possibility to maximize the PV solar surface is for retro-fits depending on the strength of the street lamp post, where the wind load area of the PV solar surface is considered together with the street light unit weight, according to regulations. An important task is thereby to minimize the weight for a street light unit with a PV surface.

An important task is also to have an electric design with high efficiency and a low energy loss in a group installation, and this with a high quality, voltage output and a reliable control system. The solar electricity needs to be within regulations for frequency and flicker and as the installations often can be done as retro-fits on existing street light cablings and in groups with different number of units and distances to a group central, which may cause disturbance of electrical quality, it is of big importance to see to that the quality of the voltage at the group-central connection to the electrical grid is guaranteed within quality regulations.

JP 3168977 relates to a lighting device for a street light that can be illuminated by receiving power from a power supply unit that uses solar power to store electricity.

KR 20130125636 concerns a revolving type bulletin apparatus that is arranged to provide information. The revolving type bulletin apparatus comprises a rotation plate that is installed between a lower cover and an upper cover and rotated by a power transfer part. A photovoltaic part is installed on the upper surface of the upper cover.

DE 10 2007 041842 A1 discloses a light unit group connection for connecting a group of light units for street or road lighting installations to an electrical grid.

### SUMMARY

The present invention concerns a light unit group connection for connecting a group of light units for street or road lighting installation to an electric grid having the features recited in claim 1. A street light unit may be provided with a solar energy production from a maximized solar PV surface and with best possible solar energy efficiency and electricity quality as well as a low-loss and high-quality control system. The by It may have a low weight design, street light luminaire with an upper part for a maximized size, leaning PV solar unit that is separately turnable in geographic directions, towards the sun, with a possible, cleaning device for the PV solar surface, a device for AC voltage quality improvement at the group connection to the electric grid and a reliable wire based, low energy loss, control system.

The light unit can be installed as retro fit on existing lamppost, in existing lamp groups or in new streetlight installations and can be permanent connected to the electrical grid, without or with battery. The light unit comprise a lower part, which is a low-weight load carrying part comprising the connection to a lamppost, the connection to an upper part and a streetlight. It comprises also an upper part, which is a low-weight resilient design that mainly is a loadtransferring, angle keeping and sealing part to the leaning PV surface, characterized by having an overlapping, wall mating connection to the lower part and a substantial conical decreasing form, upwards, to the substantially bigger PV surface than its connection, which is vital for load transfer, aerodynamics and appearance, and which allows a thin-wall design that could be without a supporting inner wall structure and could be made elastic to managing different loads or impacts on its surface good and which is possible to adjust in direction towards the sun. The upper- and lower parts are possible to be performed as single, uncombined detail, or as composed of several parts.

The rotation adjustment of the upper part with the PV solar device is arranged in the luminaire housing where the upper part is possible to substantially rotate, in relation to the lower part around a vertical axis in the cylindrical interface between the upper part and the lower part. A horizontal adjustment of the rotation plane is arranged by a two-axis adjustment in the connection of the luminaire to the lamppost, but could also be arranged in other ways.

Within or in connection to the light unit luminaire there is a dc/ac inverter device connected to the PV solar unit and a local LED driver device connected or integrated to a LED lamp, or other type of lamp. These are connected to a switch unit, to which a power line is connected, and which is further connected to the light units group central. At the group connection, for a group of several light units to the electrical grid, there is a voltage optimizing unit with a set of needed types of electrical filters to reduce any power line voltage disturbance. The type of filter or filters in the voltage optimizing unit is, preferable, to be customized as needed for each installation. The filter device unit can also have, or only have, an AC frequency optimizing circuit.

The switch unit is remotely wire controlled from a light unit group central or at a central power supply, through a PLC. The switch unit contains one or several relays, with an electrical circuit that reads voltage interruptions codes, being controlled short power cut-offs, on the power line, controlled by the PLC, making the switch unit connecting or disconnecting the lighting unit or the PV solar unit, based on received interruption signal code that are transmitted. The PLC could preferably be controlled by a clock function or a twilight relay.

Alternatively the switch unit could be controlled locally by the output level of the PV unit or also alternatively be wireless controlled from a central.

Furthermore, to allow best possible sun light to the PV solar surface, the light unit can comprise a cleaning device for the PV solar surface that has a transparent film covering the surface which can be moved against a scraping device that clears the surface of the transparent film. The movement of the transparent film could preferably be done through electrical motor driven rollers. The cleaning device can be connected to a remote weather based control system that preferably could move the transparent film at rain to improve the cleaning scraping function or at snowfall to prevent snow or ice from covering or building up on the PV surface and also be used for turning off the cleaning system at not suitable weather conditions or turning it on at suitable weather or at time or date interval.

### BRIEF DESCRIPTION OF THE DRAWINGS

Figure 1a shows a perspective view of a light unit
Figure 1b shows a perspective exploded view of a light unit, with upper and lower part
Figure 2a and 2b shows side views of leaning angle embodiments
Figure 2c, 2d, 2e and 2f shows perspective views of different rotation angles
Figure 3a shows a side section of a light unit
Figure 3b shows an section enlargement of the overlapping wall connection
Figure 4a shows a perspective view of a cleaning device
Figure 4b shows a side section of a cleaning device
Figure 4c shows a perspective view with a cleaning device scraping edge,
Figure 5 shows a schematic electric flowchart, of an embodiment, for a light unit group connection to an electrical grid

### DETAILED DESCRIPTION OF EMBODIMENTS

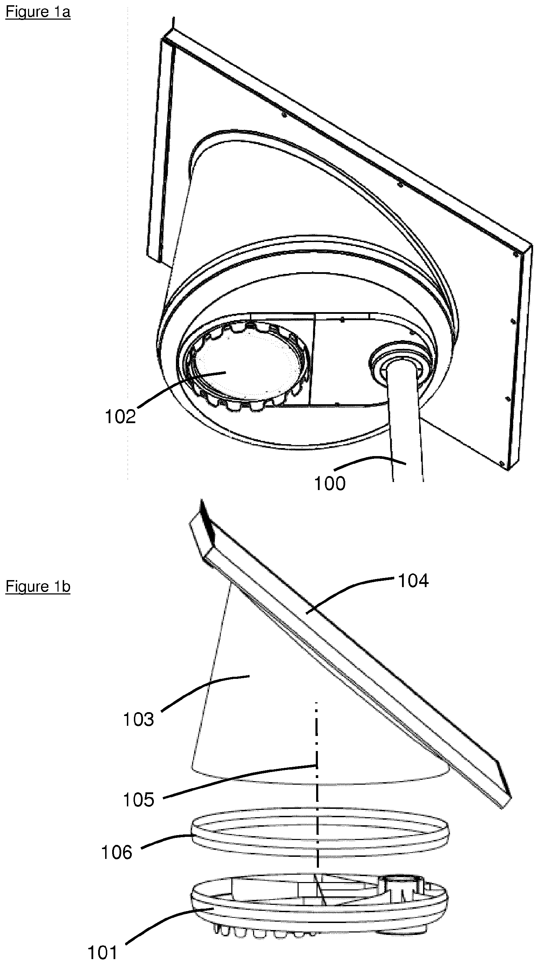

Figure 1a shows a light unit with a lamp post 100 and a luminaire with a lower part with a lighting device 102 and an upper part with the PV solar unit, depicted in a perspective view from below. Figure 1b shows an exploded view, depicted in a perspective view from above, with the lower part 101 and the conical upper part 103 with the PV solar surface 104, and the vertical rotation axis 105 for the upper part 103 and a seal off strip 106.

The lower part 101 has a cylindrical receiving interface to the upper part 103 to allow a strong, sealed and possible rotation adjustment between the both. The upper part 103 has an overlapping, strong, wall-mating connection to the lower part 101, preferably by several screws or rivets and or by seal off glue, and has a closed conical decreasing shape upwards to the connection to a substantially bigger, than the connection, leaning surface for the PV solar unit 104, which makes a thin-wall, low-weight design possible, comprising a wind-, raindirt- and snow- repellent geometrical shape and a cylindrical, rotational, interface to the lower part 101.

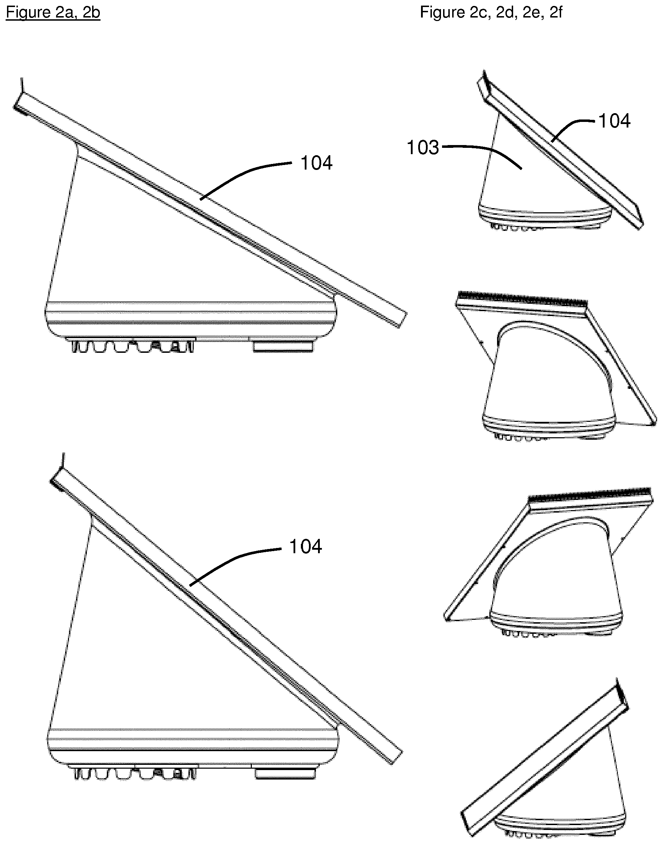

Figure 2a and 2b shows side views of different leaning angles for the PV solar unit 104, that will be suitable for installation on different geographic latitudes. The PV solar unit 104 is connected and sealed off to the upper part 103 and could be a solar panel frame unit or a thin PV film or any other PV solution. Figure 2c, 2d, 2e and 2f shows views of different rotation angles of the upper part 103 with the PV solar unit 104, that will be suitable for installations in different geographic directs towards the sun, depicted in perspective views.

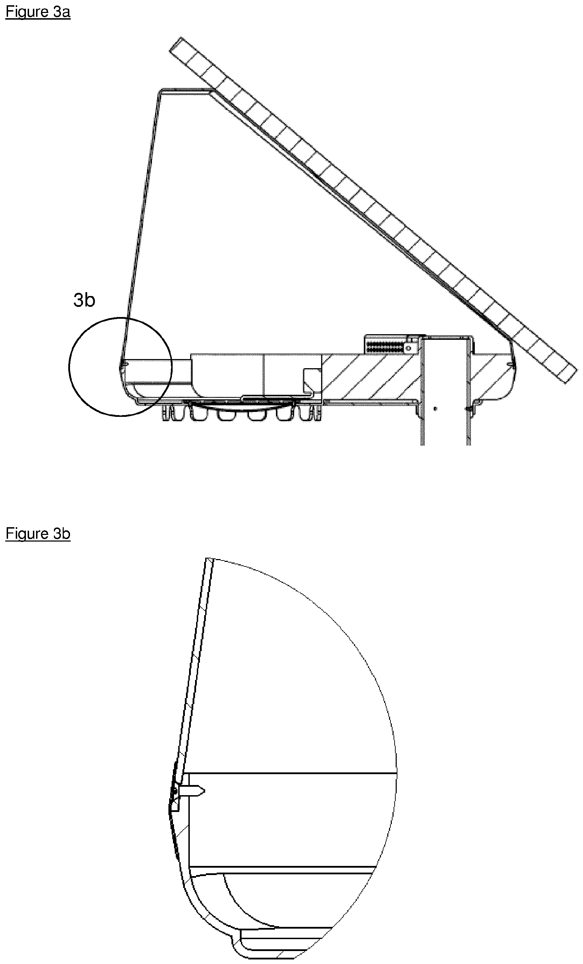

Figure 3a shows a section of a light unit, with the PV solar plane adjusted facing the opposite direction compared to lighting device, and showing the overlapping circular connection of the upper part to the lower part with the possible elastic, thin-wall, design of the upper part, preferably without inner support wall structure. Figure 3b shows a section enlargement of the overlapping connection.

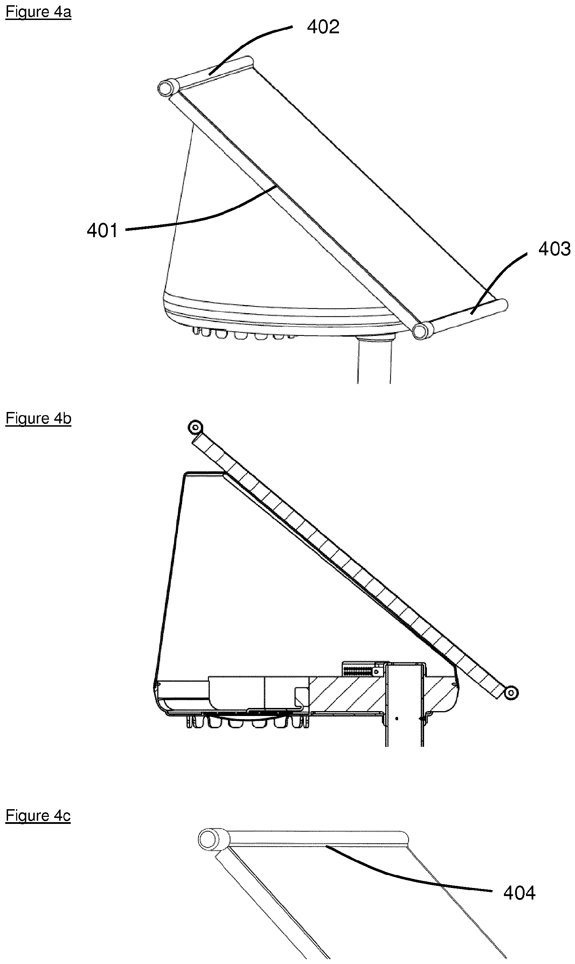

Figure 4a shows a perspective view of a cleaning device with an upper roller 402, a lower roller 403 and a transparent film 401. Figure 4b shows a section of a light unit with a cleaning device. Figure 4c shows enlarged perspective view of a cleaning device with the transparent film that covers the PV solar surface and is moved up or down at cleaning against one or several scraping edges 404.

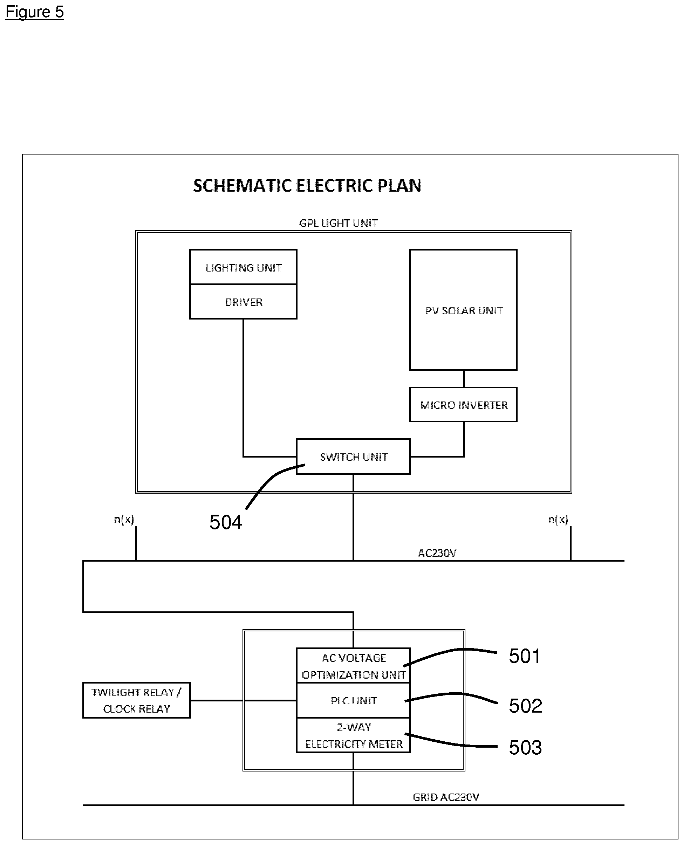

Figure 5 shows a schematic electric flowchart for a light unit group connection to the electric grid, where a group of light units are either retro fitted on an existing former street lamp group or connected together in a new group installation. Figure 5 also shows a position for an AC voltage optimization unit 501 for the group, with possible electrical filters and or a AC frequency optimizer at the voltage supply to the electric grid. This, to give a voltage according to solar energy voltage quality regulations. Figure 5 also shows a possible PLC 502 position and a two-way electricity meter 503, for the group, at the connection to the electric grid. Figure 5 also shows the switch unit 504 which is controlled by the PLC unit 502, which makes the switch unit 504, connecting or disconnecting the lighting unit or PV solar unit.

## Claims

1. Light unit group connection for connecting a group of light units for street or road lighting installations to an electrical grid, said light unit group connection having a cable for connecting the group of light units to the electrical grid, each light unit having an integrated lighting device (102) and solar power unit, and containing a DC to AC power conversion for solar electricity produced by said solar power unit, and a solar electricity return for returning solar electricity to the electrical grid via the same cable that connects the lighting unit to the electrical grid, whereby said light unit group connection contains one or several group AC optimization units (501) consisting of one or several filters and/or frequency optimization components at the group's connection to the electrical grid to give a voltage according to solar energy voltage quality regulations.

2. Light unit group connection according to claim 1, including a PLC unit (502), a two-way electricity meter (503) for the group at the connection to the electrical grid, whereby said light unit comprises a switch unit (504) that is controlled by the PLC unit (502) to connect or disconnect a light unit.

## Patentansprüche

1. Leuchtengruppenverbindung zum Verbinden einer Gruppe von Leuchteneinheiten für Straßen- oder Straßenbeleuchtungsanlagen mit einem Stromnetz, wobei die Leuchtengruppenverbindung ein Kabel zum Verbinden der Gruppe von Leuchteneinheiten mit dem Stromnetz aufweist, wobei jede Leuchteneinheit eine integrierte Beleuchtungsvorrichtung (102) und Solarstromeinheit aufweist und eine Gleichstrom-zu-Wechselstrom-Leistungsumwandlung für den von der Solarstromeinheit erzeugten Solarstrom und eine Solarstromrückführung zum Rückführen von Solarstrom in das Stromnetz über dasselbe Kabel, das die Leuchteneinheit mit dem Stromnetz verbindet, umfasst, wobei die Leuchtengruppenverbindung eine oder mehrere Gruppen-Wechselstrom-Optimierungseinheiten (501) umfasst, die aus einem oder mehreren Filtern und/oder Frequenzoptimierungskomponenten an der Verbindung der Gruppe mit dem Stromnetz bestehen, um eine der Sonnenenergie-Spannungsqualitätsvorschriften entsprechende Spannung zu liefern.

2. Leuchtengruppenverbindung nach Anspruch 1, mit einer SPS-Einheit (502), einem Zweiwege-Stromzähler (503) für die Gruppe an der Verbindung mit dem Stromnetz, wobei die Leuchteneinheit eine Schalteinheit (504) umfasst, die von der SPS-Einheit (502) gesteuert wird, um eine Leuchteneinheit zu verbinden oder zu trennen.

## Revendications

1. Connexion de groupe d'unités d'éclairage pour connecter un groupe d'unités d'éclairage pour des installations d'éclairage public ou routier à un réseau électrique, ladite connexion de groupe d'unités d'éclairage ayant un câble pour connecter le groupe d'unités d'éclairage au réseau électrique, chaque unité d'éclairage ayant un dispositif d'éclairage intégré (102) et une unité à énergie solaire, et comprenant une conversion de puissance CC-CA pour l'électricité solaire produite par ladite unité à énergie solaire, et un renvoi d'électricité solaire pour renvoyer de l'électricité solaire au réseau électrique via le même câble qui connecte l'unité d'éclairage au réseau électrique, moyennant quoi ladite connexion de groupe d'unités d'éclairage comprend une ou plusieurs unités d'optimisation de CA de groupe (501) consistant en un ou plusieurs filtres et/ou composants d'optimisation de fréquence au niveau de la connexion du groupe au réseau électrique pour donner une tension en fonction de la réglementation sur la qualité de la tension de l'énergie solaire.

2. Connexion de groupe d'unités d'éclairage selon la revendication 1, comprenant une unité PLC (502), un compteur d'électricité bidirectionnel (503) pour le groupe au niveau de la connexion au réseau électrique, moyennant quoi ladite unité d'éclairage comprend une unité de commutation (504) contrôlée par l'unité PLC (502) pour connecter ou déconnecter une unité d'éclairage.
